# EUROPÄISCHE PATENTSCHRIFT

(11) **EP 1 375 253 B1**
(45) Veröffentlichungstag und Bekanntmachung des Hinweises auf die Patenterteilung: **02.08.2006**
(21) Anmeldenummer: 03012180.0
(22) Anmeldetag: 04.06.2003
(51) Int. Cl.: B60R 1/00, B60R 21/00, B60R 16/02

(54) **Verfahren zur Überwachung des Innen-bzw.Aussenraums eines Fahrzeugs sowie ein Fahrzeug mit wenigstens einer Rundsichtkamera**
Method for monitoring inner and outer space of a vehicle and a vehicle with at least an omniview camera
Méthode pour surveiller l'espace interieur et exterieur d'un véhicule et un véhicule avec une caméra à visualisation omnidirectionnelle

(30) Priorität: 18.06.2002 DE 10227221
(43) Veröffentlichungstag der Anmeldung: 02.01.2004
(73) Patentinhaber: DaimlerChrysler AG, 70567 Stuttgart (DE)
(72) Erfinder: Franke, Uwe, 73066 Uhingen (DE); Stein, Fridtjof, 73760 Ostfildern (DE); Gehrig, Stefan, 71034 Böblingen (DE); Würz-Wessel, Alexander, 73084 Salach (DE); Menjon, Valery, 89075 Ulm (DE)

(56) Entgegenhaltungen:
- EP-A- 1 323 591
- WO-A1-02/43982

## Beschreibung

Die Erfindung betrifft ein Verfahren zur Überwachung des Innen- bzw. Außenraums eines Fahrzeugs sowie ein Fahrzeug mit mindestens einer Rundsichtkamera im Fahrzeuginnenraum gemäß den Oberbegriffen der Ansprüche 1 bzw 6. Gattungsgemäße Verfahren bzw. Fahrzeuge sind allgemein im Stand der Technik bekannt.

Kraftfahrzeuge mit einer Kamera im Fahrzeuginnenraum sind bekannt, z. B. kann man einzelne Kameras mit Sichtfeld nach außen zur Vorder-, Seiten- bzw. Rückraumüberwachung durch die Scheiben des Fahrzeuges hindurch verwenden. Es wurden auch schon Kameras zur Beobachtung von Teilen des Fahrzeuginnenraums vorgeschlagen, etwa in der DE-A-198 03 158, die eine Vorrichtung zur optischen Vigilanzzustandsbestimmung der Bedienperson eines Fahrzeugs zeigt.

Aus der vorangemeldeten unveröffentlichten deutschen Patentanmeldung des Anmelders mit dem amtlichen Aktenzeichen 101 58 415.6 ist ein Verfahren zur optischen Überwachung des Innenraums eines Fahrzeugs mit mindestens einer Rundsichtkamera bekannt. Dabei ist die Erfassung des Außenraumes auch durch wenigstens eine Rundsichtkamera dargestellt. Diese beschriebene Vorgehensweise erfordert eine aufwendige Auswertung der Bilddaten, wobei die Aussagekraft der ausgewerteten Daten nicht immer ausreichend ist.

Der Erfindung liegt die Aufgabe zugrunde, ein Verfahren zur Überwachung des Innen- bzw. Außenraums eines Fahrzeugs sowie ein Fahrzeug mit einem Sensorsystem zur Durchführung des Verfahrens zu schaffen, welches detaillierte Informationen mit angemessener Verläßlichkeit zur Verfügung stellen kann.

Diese Aufgabe wird gemäß der Erfindung durch ein Verfahren mit den Merkmalen des Anspruchs 1 und ein Fahrzeug mit den Merkmalen des Anspruchs 6 gelöst.

Vorteilhafte Weiterbildungen der Erfindung sind Gegenstand der Unteransprüche.

Gemäß der Erfindung wird der Fahrzeuginnenraum wie auch der Fahrzeugaußenraum mittels mindestens einer Rundsichtkamera beobachtet, die in einer bevorzugten Ausführungsform aus einer konventionellen digitalen insbesondere CCD-Kamera und einem von der Kamera abgesetzten z. B. kugel- oder parabolförmig konvexen Spiegel besteht, welcher wiederum von der Kamera beobachtet wird. Darüber hinaus haben sich auch Rundsichtkameras in einem zusammenhängenden Gehäuse bewährt. Rundsichtkameras sind z. B. in den PCT-Veröffentlichungen WO 99/30197, WO 99/45422 und WO 97/43854 beschrieben und werden z. B. für Überwachungszwecke und bei der Roboternavigation eingesetzt. Typisch erzeugen sie ein 360°-Rundumbild ähnlich wie eine Fischaugenkamera. Anders als Fischaugenkameras die am Aufnahmehorizont, d. h. am Rande ihres azimutalen Aufnahmebereichs von max. 180° praktisch keine Details mehr erkennen lassen, geben Rundsichtkameras auch im Randbereich eines Bildes noch Details wieder und ermöglichen dadurch ggf. sogar azimutale Aufnahmebereiche von mehr als 180°.

Bei geeigneter Anordnung der Rundsichtkamera, insbesondere im Bereich des Innenspiegels kann ein sehr großer Teil des Fahrzeuginnenraums wie auch des Fahrzeugaußenraums auf einmal erfaßt werden. Es hat sich ebenso bewährt, einen konvexen Spiegel im Fahrzeuginnenraum am Fahrzeugdach anzuordnen, wodurch die ganze darunterliegende Hemisphäre, also nahezu der ganze Fahrzeuginnenraum wie auch der durch die Seitenscheiben erfaßbare Außenraum aufgenommen werden kann.

Darüber hinaus hat es sich bewährt, den konvexen Spiegel bzw. die Kamera selbst in der Armaturentafel zu integrieren, insbesondere wenn vornehmlich der vordere Bereich des Fahrzeuginnenraums und der Bereich vor dem Fahrzeug überwacht werden soll. Durch die Rundsichtkamera erfaßten Bilddaten wird es möglich, einen interessanten Bereich für eine nähere, detailliertere Auswertung zu selektieren und für eine detaillierte Auswertung einen zweiten Sensor einzusetzen, der sich durch einen räumlich beschränkten Erfassungsbereich auszeichnet und so ausrichtbar ausgebildet ist, dass er auf einen als interessant eingestuften Bereich ausgerichtet werden kann. Die durch den zweiten Sensor erfaßten Daten werden einer Auswertung unterzogen, die eine detailliertere Information über den selektierten Bereich gibt, als es die Rundsichtkamera regelmäßig alleine ermöglicht.

Durch diese Erfindung wird ein Verfahren geschaffen, das eine zuverlässige Information in relevanten, selektierten Bereichen des Außen- oder auch des Innenraums des Fahrzeuges zur Verfügung stellen kann. Durch die umfassende Aufnahme der Bilddaten der Rundsichtkamera ist ein sehr sicheres Erfassen und Selektieren des oder der relevanten Bereiche von besonderem Interesse möglich, ohne dass einzelne Bereiche, die für eine Fahrentscheidung von Bedeutung sein können, übersehen oder nicht berücksichtigt werden können. Um eine sichere Fahrentscheidung zu ermöglichen, wird das erfindungsgemäße Verfahren bzw. das erfindungsgemäße Fahrzeug verwendet, indem besonders relevante Bereiche selektiert und einer detaillierteren Erfassung durch einen zweiten, insbesondere einen spezifizierteren Sensor mit besonderen Eigenschaften zugeführt werden. Hierdurch wird die Auswertesicherheit und damit auch die Fahrsicherheit wesentlich erhöht.

Auf Basis der erfaßten und ausgewerteten Bilddaten kann einerseits der Fahrer frühzeitig gewarnt werden, andererseits Vorkehrungen zur Verhinderung von Unfällen durch aktiven Eingriff in das Fahrzeug oder auch Vorkehrungen zur Einschränkung der Schwere von Unfallfolgen, beispielsweise durch frühzeitiges Auslösen von Airbags oder ähnliches bewirkt werden.

Nach einer besonders bevorzugten Ausführungsform der Erfindung wird der zweite Sensor aus wenigstens einer Digitalkamera, einer Infrarotkamera, einem Laserpunktsensor, einem Radarsensor oder einer Kombination daraus gebildet. Hierdurch wird insbesondere durch den Laserpunktsensor oder den Radarsensor eine sehr sichere Auswertung des relativen Verhaltens des erfaßten, selektierten Bereiches des zweiten Sensors zu dem Fahrzeug geschaffen. Insbesondere werden die Relativgeschwindigkeit oder auch die Entfernung zu dem Fahrzeug erfaßt, ausgewertet und für eine weitere Verarbeitung im Fahrzeug zur Verfügung gestellt. Gerade durch die Verwendung von Sensortypen, die die Relativgeschwindigkeit von Objekten im erfaßten Bereich sicher gestatten, als zweiter Sensoren ist eine sehr wichtige Information zur Verhinderung oder zur Einschränkung der Folgen von Unfällen gewonnen, was die Fahrzeugsicherheit des Fahrzeugs selbst aber auch des gesamten Verkehrs insbesondere der Sicherheit von Fußgängern zugute kommt. Aber auch Infrarotkameras oder Digitalkameras mit einem stärkeren Vergrößerungsfaktor insbesondere mit einer Zoomfunktion erweisen sich als sehr nützlich, da sie zusätzlich wesentlich detailliertere Informationen insbesondere unter ungünstigen Situationen wie Nebel oder Dämmerung oder Nacht zu den durch die Rundsichtkamera gewonnene Informationen gewinnen lassen. Diese zusätzlichen Informationen werden für sich oder in Kombination mit den Daten der des ersten Sensors ausgewertet, dem Fahrzeug zur Verfügung gestellt und dementsprechend das Fahrzeug zur Erhöhung der Verkehrssicherheit gesteuert.

Vorzugsweise erfolgt die Ausrichtung des zweiten Sensors auf Basis einer automatisierten Auswertung der Bilddaten des ersten Sensors, indem der zweite Sensor entweder motorisch verschwenkt wird und dadurch der eingeschränkte Erfassungsbereich auf einen anderen Bereich des Erfassungsbereich der Rundsichtkamera verschwenkt wird oder elektronisch, wie es beispielsweise bei einer geänderten Ansteuerung einer Phased-Array-Radarantenne erfolgt. Bei dieser wird durch differenziertes Ansteuern ein und derselben Radarantenne eine unterschiedliche Richtcharakteristik erreicht, ohne dass es ein mechanisches oder motorisches Verschwenken der Antenne respektive des Sensors erfordert. Eine derartige elektronische Ausrichtung des zweiten Sensors erweist als sehr vorteilhaft, da sich mechanische verschwenkbare Sensoren durch das stetige Rütteln und Schütteln in Fahrzeugen als sehr anfällig herausgestellt haben.

Vorzugsweise wird die Ausrichtung des zweiten Sensors auf Basis einer automatisierten Auswertung der Bilddaten durchgeführt, wobei sich insbesondere zur Auswertung von Bilddaten Bewegungs-, Kontur- und/oder Farbanalyseverfahren bewährt haben. Durch diese Auswertung der Bilddaten des ersten Sensors wird automatisiert ein Bereich von besonderem Interesse selektiert und anschließend durch den zweiten Sensor einer eingehenden detaillierteren Beobachtung unterzogen wird. Dabei hat es sich in besonderem bewährt, die Selektion des interessierenden Bereiches mit Hilfe einer Auswertung von Bewegungen im Bild des ersten Sensors z. B. anhand des optischen Flusses durchzuführen, was insbesondere im Falle einer Anwendung der Erfindung im Zusammenhang mit einer Vorrichtung zur Einschränkung oder Verhinderung von Kollisionen mit Fußgängern oder Fahrradfahrern besonders bewährt hat.

Da die erhaltenen Bilder der wenigstens einen Rundsichtkamera stark verzerrt sind, d. h. in irgendwelchen krummlinigen "Welt-Koordinaten" vorliegen, werden daraus ein oder mehrere unverzerrte Teilbilder erzeugt, indem die Bilder der Kamera auf zylindrische oder ebene Koordinaten transformiert werden. Die Beziehung zwischen den krummlinigen Koordinatensystem der Kamerabilder und den zylindrischen oder ebenen Zielkoordinatensystemen ist durch die Spiegelgeometrie und Kamera bzw. durch die Struktur der Rundsichtkamera festgelegt. Bei der Transformation werden die Helligkeits- und ggf. Farbwerte jedes Bildpunktes eines Kamerabildes einem Punkt im zylindrischen oder ebenen Koordinatensystem zugeordnet, dessen Koordinaten sich z. B. im Fall eines Kugelspiegels aus trigonometrischen Beziehungen ergeben.

Die entsprechenden Berechnungen können im wesentlichen in Echtzeit in einem Rechner im Fahrzeug durchgeführt werden; um Rechenleistung zu sparen, wird die beschriebene Zuordnung in der Praxis aber vorzugsweise anhand einer oder mehreren Transformationstabellen durchgeführt, die im Rahmen einer Kamerakalibrierung erstellt und zur Verwendung während des Kamerabetriebes in einem Bordrechner oder einer festverdrahteten Bildentzerrungselektronik gespeichert werden.

Auf diese Weise erhält man ein oder mehrere Teilbilder des Fahrzeuginnenraums, bei denen im wesentlichen nur noch eine eindimensionale Verzerrung (im Falle einer Transformation auf Zylinderkoordinaten) bzw. (im Falle einer Transformation auf ebene Koordinaten) überhaupt keine Verzerrung mehr vorliegt, so dass gerade Linien im wesentlichen als gerade Linien wiedergegeben werden. Solche Bilder in zylindrischen oder ebenen Koordinaten können dann elektronisch sehr einfach weiterverarbeitet werden, insbesondere sehr einfach ausgewertet werden. Hierdurch gelingt es eine einfache Weiterverarbeitung und damit eine kostengünstige Realisierung der Erfindung in einem Fahrzeug zu ermöglichen. Insbesondere wird die Auswertung, die Selektion eines besonderes interessierenden Bereiches zur näheren Auswertung durch den zweiten Sensor mit Hilfe einer Selektionsstufe wesentlich erleichtert. Darüber hinaus läßt sich durch diese Transformation eine Modularisierung des Überwachungssystems für ein Fahrzeug erreichen, durch die ein einfaches Ersetzen der wenigstens einen Rundsichtkamera mit anschließender Transformation an die jeweilige Gegebenheit eines Fahrzeugs bei weitgehend gleicher nachfolgenden Bildverarbeitung und Auswertung mit Selektion der interessierenden Bereiche ermöglicht ist. Hierdurch lassen sich die Kosten für derartige Systeme zur Überwachung des Innen- und Außenraums eines Fahrzeuges merklich senken und dadurch die Akzeptanz beim Benutzer ohne wesentlichen Verlust der Auswertesicherheit erhöhen.

Eine andere Ausbildung der Erfindung betrifft ein Fahrzeug mit einem ersten Sensor, der durch wenigstens eine Rundsichtkamera im Innenraum des Fahrzeugs gebildet wird, deren Sichtfeld den Innen- bzw. Außenraum des Fahrzeuges zumindest teilweise umfaßt. Dem ersten Sensor ist ein zweiter Sensor zugeordnet, der einen eingeschränkten räumlichen Erfassungsbereich aufweist, welcher abhängig vom ersten Sensor in seiner Ausrichtung steuerbar ist. Dabei erfolgt die Ausrichtung vorzugsweise über eine Steuereinheit, die auf Basis einer automatisierten Auswertung der Bilddaten des ersten Sensors, welche vorzugsweise durch eine Bildauswerteeinheit durchgeführt wird, so steuerbar ist, dass ein für besonders interessant oder relevant eingestufter selektierter Bereich des Sichtbereiches des ersten Sensors zielgerichtet durch den zweiten Sensor erfaßt und eingehend ausgewertet wird. Dabei erfolgt die Ausrichtung des zweiten Sensors mittels einer Steuereinheit, die den zweiten Sensor vorzugsweise motorisch verschwenkt oder auf elektronische Weise dementsprechend in seiner Ausrichtung anpaßt. Hierdurch ist ein vorzugsweise automatisiertes Erfassen der relevanten Informationen aus dem Außenraum bzw. Innenraum des Fahrzeuges anhand der Selektion durch eine Selektionsstufe in Verbindung mit einer entsprechenden Steuereinheit, die dem ersten Sensor zugeordnet sind, geschaffen und dadurch eine sehr sichere Funktionsweise des Verfahrens zur Überwachung des Innen- und Außenraumes eines Fahrzeugs gegeben.

Als besonders vorteilhaft hat es sich erwiesen, entweder den ersten und/oder den zweiten Sensor jeweils für sich oder gemeinsam als stereoskopisches Erfassungssystem des Innen- bzw. Außenraums des Fahrzeugs zu verwenden. Dadurch werden die erfaßten Information jedes Sensors, der wenigstens durch zwei Einzelsensoren gebildet wird beispielsweise durch zwei Rundsichtkameras oder aus zwei Digitalkameras, zwei Infrarotkameras, zwei Laserpunktsensoren oder zwei Radarsensoren oder einer Kombination aus zwei derartigen Einzelsensoren in der Art gebildet, dass mit zwei Einzelsensoren eine stereoskopische Auswertung des Erfassungsbereiches möglich ist. Im Rahmen dieser stereoskopischen Auswertung können insbesondere Informationen zur Tiefenstaffelung der Objekte im Erfassungsbereich und insbesondere Informationen zur Entfernung oder auch zur Veränderung der Entfernung, d. h. der Relativgeschwindigkeit erfaßt bzw. ausgewertet werden. Diese stereoskopischen Informationen ermöglichen ein sehr zielgerichtetes Aktivieren von Warnfunktionen, oder ein Aktivieren von Abwehrstrategien zur Verhinderung oder zur Einschränkung der Auswirkungen von Unfällen durch frühzeitiges Aktivieren von Abwehrmaßnahmen sogenannte Pre-Crash-Maßnahmen, oder auch im Hinblick auf den Eingriff in das Fahrverhalten des Fahrzeuges z. B. durch ein eigenständiges, autonomes Abbremsen oder Ausweichen des Fahrzeuges. Hierbei werden insbesondere die Informationen zur räumlichen Gliederung des Außenraums des Fahrzeuges insbesondere im Vorderbereich zur Grundlage der Steuerung gemacht.

Durch die Verwendung von Infrarotkameras, Laserpunktsensoren und/oder Radarsensoren gelingt es auf sehr sichere Weise, den Informationsgehalt der erfaßbaren Umgebung im Innenraum bzw. im Außenraum des Fahrzeuges über den Informationsgehalt einer Kamera, welche im wesentlichen ausschließlich im sichtbaren Frequenzbereich arbeitet, zu erweitern. Dadurch wird eine wesentlich differenziertere Darstellung des bzw. Information zum Umgebungsbereich ermöglicht und für eine spätere Auswertung des Fahrzeuges zur Verfügung gestellt.

Es hat sich besonders bewährt, den zweiten Sensor mit einer Zoomfunktion zu versehen. Dabei wird die Zoomfunktion insbesondere abhängig von der Entfernung der Objekte in den selektierten Bereich dahingehend gesteuert, dass bei besonders weit entfernten Objekten der Zoomfaktor groß und bei Objekten im Nahbereich der Zoomfaktor klein gewählt wird. Dadurch ist stets eine sehr sichere, detaillierte und im wesentlichen vollflächige Informationsbeschaffung über die Objekte in dem selektierten Bereich ermöglicht. Durch diese Ausbildung ist gelungen, unnötige Informationen durch eine ungeeignete Ausschnittswahl von der Erfassung und Auswertung weitgehend auszuschließen, was die Auswertung vereinfacht und regelmäßig auch beschleunigt.

In besonderem Maße hat es sich bewährt, den ersten Sensor, der eine oder zwei oder auch mehrere Rundsichtkameras beinhaltet, im Dachbereich insbesondere im Bereich des Innenspiegels anzuordnen, wodurch ein sehr vorteilhaft strukturierter Erfassungsbereich des ersten Sensors gegeben ist. Insbesondere sind hier der Seitenbereich und der Vorderbereich des Fahrzeugs durch die Scheiben des Fahrzeugs, aber auch der Innenraum, insbesondere der Bereich der Vordersitze, sehr gut erfaßbar und dementsprechend im Hinblick auf zu selektierende Bereiche sehr einfach auswertbar.

Daneben hat es sich besonders bewährt, den zweiten Sensor im Bereich des Armaturenbrettes anzuordnen, wodurch ein Beobachten des vor dem Fahrzeug befindlichen Bereiches, dem Vorderraum bzw. des Seitenraums des Fahrzeuges insbesondere im Hinblick auf eine Anwendung wie ein Kreuzungsassistent, Ampelerkennung oder Fahrzeugerkennung oder Spurerkennung in besonderem Maße unterstützt oder auch ermöglicht wird. Bei dieser Anordnung ist es in besonderem Maße möglich, die durch den ersten Sensor und den zweiten Sensor erfaßten Informationen gemeinsam auszuwerten. Dies ermöglicht insbesondere eine stereoskopische Auswertung der erfaßten Bereiche, wodurch insbesondere eine räumliche Gliederung der gemeinsam erfaßten Bereich erfaßbar wird oder auch das Auftreten von Mehrdeutigkeiten (multiple Hypothesen) verhindert oder eingeschränkt werden kann. Die Verhinderung oder die Einschränkung von Mehrdeutigkeiten läßt sich in besonderem Maße durch die Verwendung von mehreren insbesondere durch drei oder mehr Einzelsensoren, deren erfaßten Informationen gemeinsam ausgewertet werden, beispielsweise im Sinne eines trinokularen Stereoauswertungsverfahrens, erreichen. Durch eine Anordnung der Sensoren im Innenraum des Fahrzeuges ist ein besondere Schutz vor Beschädigung oder Verschmutzung gegeben, was sich auf die Qualität der Sensordaten positiv auswirkt.

Daneben hat es sich besonders bewährt, den zweiten Sensor zumindest teilweise im Bereich der Stoßfänger, der Scheinwerfer oder dem Randbereich des Fahrzeugdaches anzuordnen, da von diesen ohne die Behinderung durch die Seitenscheiben eine unmittelbare Erfassung des Außenbereiches und damit eine unmittelbare Erfassung des selektierten Außenbereiches möglich ist. Dies führt zu detaillierteren und unverfälschteren Informationen über die selektierten Außenbereiche. Bei der Verwendung von Radarsensoren hat sich diese Anordnung des Radarsensors in besonderem Maße bewährt.

Durch die Kombination der wenigstens einen Rundsichtkamera in Verbindung mit dem zweiten ausrichtbaren Sensor mit eingeschränktem Sichtfeld gelingt es anders als bei anderen konventionellen optischen Erfassungssystemen für Fahrzeuge die Anzahl der notwendigen Kameras zur Durchführung der Vielzahl möglicher Aufgaben zur Erfassung von Informationen aus dem Innenraum bzw. aus dem Außenraum zu reduzieren.

Neben den genannten Anwendungsmöglichkeiten der Erfindung in Zusammenhang mit Assistenzsystemen zur Ampelerkennung, Verkehrszeichenerkennung, Stauverfolgungsfahren, Spurerkennung, Rechts-Links-Situationserkennung, Objekterkennung im Nahbereich wie z. B. Fahrradfahrer oder Erfassung und Auswertung einer Kreuzungssituation sind auch andere Anwendungen wie Innenraumüberwachung zur Diebstahlsicherung oder zur Dokumentation von Verkehrssituationen insbesondere im Zusammenhang mit Unfallgeschehen realisierbar. Die Anwendungen und Bildauswertesysteme, die im Zusammenhang mit der Erfindung zur Anwendung kommen, erfordern keine kalibrierten Systeme; auch die Verwendung von unkalibrierten Systemen ist möglich. Auch ist eine Anwendung der Erfindung in anderen nicht-automobilen Fahrzeugen insbesondere in Flugzeugen oder Schiffen beispielsweise für Überwachungsaufgaben möglich.

Weitere Merkmale und Vorteile der Erfindung ergeben sich aus der folgenden Beschreibung von Ausführungsbeispielen anhand der Zeichnung. Darin zeigen beispielhaft:
- Fig. 1: eine Prinzipskizze einer Vorrichtung zur Überwachung des Innen- bzw. Außenraum eines Fahrzeug gemäß der Erfindung,
- Fig. 2: eine skizzenhafte Darstellung eines Bildes einer Rundsichtkamera und
- Fig. 3: ein entzerrtes Teilbild entsprechend Fig. 2.

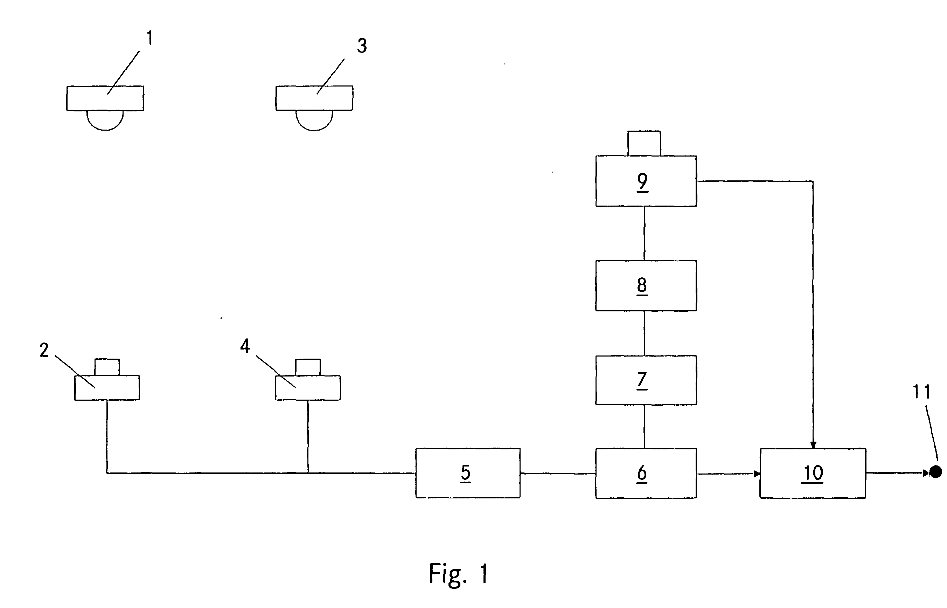

In Fig. 1 ist ein beispielhafter Aufbau einer erfindungsgemäßen Anordnung zur Überwachung des Innen- bzw. Außenraumes eines Fahrzeugs mit zwei Rundsichtkameras dargestellt.

Die erste Rundsichtkamera besteht aus einem kugel- oder parabolförmig konvexen Spiegel 1 und einer digitalen Kamera 2, die eine CCD-Kamera darstellt. Eine zweite Rundsichtkamera ist entsprechend aus einem zweiten Spiegel 3, der als kugel- oder parabolförmig konvexer Spiegel 3 ausgebildet ist und aus einer CCD-Kamera 4 aufgebaut. Die beiden Spiegel 1, 3 sind am Dach des Fahrzeuges im Innenraum angeordnet. Die beiden Kameras 2, 4 sind unterhalb der beiden Spiegel 1, 3 angeordnet, wobei sie in ihrem Sichtfeld, insbesondere das wesentliche Sichtfeld der Kameras 2, 4 umfassend, die beiden Spiegel 1, 3 haben. Derartige Rundsichtkameras sind aus z. B. in den genannten Druckschriften WO 99/30197, WO 99/45422 und WO 97/43854 beschrieben. Der konvexe Spiegel 1 ist in diesem Beispiel oberhalb des Bereiches zwischen den Vordersitzen am Dach angebracht, wobei die Spiegelfläche nach unten zeigt und die zugeordnete Kamera 2 zwischen den beiden Vordersitzen mit Blickrichtung nach oben in Richtung Spiegel 1 befestigt ist. Der zweite konvexe Spiegel 3 ist in der Mitte des Fahrzeugdaches angeordnet. Seine Spiegelfläche weist ebenso nach unten. Unterhalb des Spiegels 3 ist im Fußraum des Fahrzeugs im Fond im Bereich des Getriebetunnels die Kamera 4 so angeordnet, daß sie auf den Spiegel 3 ausgerichtet ist.

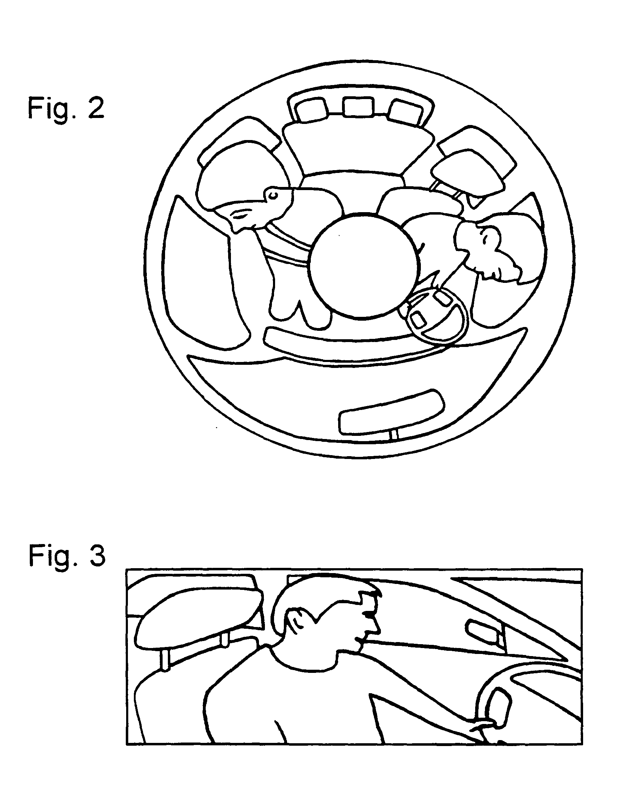

Bei dieser Anordnung sieht die Kamera 2 bzw. 4 im zugeordneten konvexen Spiegel 1, 3 ein Bild der Hemisphäre unter dem Dach des Fahrzeuges, wie es beispielhaft schematisch in Fig. 2 dargestellt ist. Dabei zeigt das Bild mit Ausnahme eines mechanisch oder elektronisch ausgeblendeten zentralen Bereichs, in dem sie sich selber abbilden würde, die oben genannte Hemisphäre. Wie man Fig. 2 entnimmt, erfaßt die Kamera nicht nur den Innenraum mit den Sitzen und den Fahrzeuginsassen sie vermag auch den Außenbereich durch die Windschutzscheiben zu erfassen, wobei zur Verbesserung der Verständlichkeit Details des Außenraums in Fig. 2 nicht dargestellt wurden. Die Darstellung wurde zur Verbesserung der Übersichtlichkeit auf eine Wiedergabe der Scheiben begrenzt, wodurch der Außenraum nicht wiedergegeben ist.

Die von den Kameras 2, 4 gelieferten digitalen Bilddaten sind stark verzerrt, da sie die Umgebung je nach der Form des Spiegels in kugel- oder irgendwelchen anderen krummlinigen Koordinaten abbilden. Jedes Bild der Kameras 2, 4 wird einer Entzerrungseinheit 5 zugeführt, in der ein oder mehrere Teile des Bildes auf ebene Koordinaten transformiert werden. In Fig. 3 ist ein beispielhaftes transformiertes Bild der Fahrerseite dargestellt. Das dargestellte Bild zeigt ein verhältnismäßig unverzerrtes Bild, in dem gerade Linien auch als im wesentlichen gerade Linien wiedergegeben werden.

Die transformierten Bilddaten werden einer Selektionsstufe 6 zugeführt, die nun aufgrund der transformierten, entzerrten Bilddaten auf einfache Weise in die Lage versetzt ist, über Kontur-, Farben- bzw. Bewegungsanalyse z.B. nach dem Konzept des optischen Flusses interessante Bereiche des durch die Kameras 2, 4 erfaßten Bilder zu selektieren.

Wird die Anordnung zur Überwachung des Innen- bzw. Außenraums im Rahmen einer Fußgängerüberwachungseinheit verwendet, wird bevorzugt eine Selektionsstufe mit einer Bewegungsanalyse verwendet, während bei einer Anwendung als Ampel- oder Verkehrszeichenassistent eine Analyse mittels Kontur und/oder Farbanalyse zur Anwendung kommt. Wird durch die Selektionsstufe in einem automatisierten Prozeß ein Bereich als besonders relevant erfaßt und dieser Bereich somit selektiert, so wird eine diesen selektierten Bereich repräsentierende Information durch die Selektionsstufe 6 an die Steuereinheit 7 gemeldet, die dann mit Hilfe der Ausrichteinheit 8 den zweiten Sensor 9, der eine CCD-Kamera mit Zoomfunktion beinhaltet, dahingehend verschwenkt, dass das Sichtfeld des zweiten Sensors 9 diesen selektierten Bereich erfaßt. Dabei wird der Vergrößerungsfaktor (Zoomfaktor) des zweiten Sensors 9 so durch die Steuereinheit 7 eingestellt, dass die Objekte in dem selektierten Bereich detailliert erfaßt werden können. Der Zoomfaktor wird dabei entsprechend der durch eine stereoskopische Vermessung bestimmten Entfernung des selektierten Bereiches bzw. der Objekte in dem selektierten Bereich gewählt.

Die stereoskopische Vermessung erfolgt dabei über die zwei Rundsichtkameras 1, 2 / 3, 4, die zusammen eine stereoskopische Rundsichtkamera bilden. Die stereoskopische Auswertung erfolgt dabei durch die Selektionsstufe 6, die die Entfernungsinformation der Steuereinheit 7 zur Verfügung stellt, die das Zoom des zweiten Sensors 9 dementsprechend steuert.

Die durch den zweiten Sensor 9 und die beiden Rundsichtkameras 1, 2 / 3, 4 erfaßten Bilddaten werden einer Bildauswerteeinheit 10 zugeführt, die eine ganzheitliche Auswertung der Bilddaten aller Erfassungssysteme also der beiden Sensoren, d. h. der ersten Rundsichtkamera 1, 2, der zweiten Rundsichtkamera 3, 4 und der Zoomkamera 9 ermöglicht. Im Rahmen der ganzheitlichen Auswertung ist es möglich, insbesondere Mehrdeutigkeiten aufzulösen bzw. eine sehr spezifische Auswertung der räumlichen Gliederung des erfaßten Außen- bzw. Innenraums zu ermöglichen. Hierdurch lassen sich insbesondere Abstände bzw. Positionen einzelner erfaßter Objekte bestimmen. Darüber hinaus lassen sich auch Relativgeschwindigkeiten erfaßter Objekte zum Fahrzeug bzw. zur Sensoranordnung berechnen. Gerade durch die beispielhafte ganzheitliche Auswertung aller Bildinformationen lassen sich sehr aussagekräftige und verläßliche Informationen zum Aufbau des Außenraums bzw. des Innenraums des Fahrzeugs gewinnen. Mit diesen sicheren, verläßlichen Informationen lassen sich durch andere Komponenten eines Fahrzeugs notwendige Maßnahmen beispielsweise Warnhinweise für den Fahrer oder Beifahrer, Maßnahmen zur weiteren Informationen für den Fahrer bzw. Beifahrer Verfügung stellen, Maßnahmen zur Reduzierung von Auswirkungen von Unfällen wie z. B. frühzeitiges Aufblasen von Airbags oder frühzeitiges Schrägstellen der Motorhaube vor einem Aufprall eines Fußgängers auf das Fahrzeugs oder Maßnahmen zum selbständigen Abbremsen, Beschleunigen oder Ausweichen eines Fahrzeugs in die Wege leiten. Hierzu werden die erforderlichen Informationen der Bildauswerteeinheit über eine Schnittstelle 11 diesen anderen Komponenten des Fahrzeuges zur Verfügung gestellt.

In besonders vorteilhafter Weise eignet sich das erfindungsgemäße Verfahren zur Verwendung in Fahrzeugen insbesondere in Verbindung mit einer Vorrichtung zum Diebstahlschutz oder einer Einrichtung zum Übertragen von Bilddaten. Hierbei werden insbesondere die Bilddaten über eine Mobilfunkeinrichtung an Personen, beispielsweise einen Eigentümer eines Kraftfahrzeugs, übermittelt sobald die Alarmanlage oder die Diebstahlschutzeinrichtung aktiviert wird.

Darüber hinaus ist die Erfindung besonders geeignet mit einem Aufzeichnungssystem zusammenzuwirken, das die Fahrsituation im zeitlichen Zusammenhang mit einem Unfall sowohl im Innenraum als auch im Außenraum des Fahrzeugs erfaßt und abspeichert, so dass eine spätere Analyse des Unfallgeschehens ermöglicht ist. Durch das Zusammenwirken der beiden Sensoren einmal als Rundumsensor (Rundsichtkameras), einmal als selektiver Sensor (zweiter Sensor) für besonders relevante Bereiche erweist es sich als sehr hilfreich, daß gerade die für eine Unfallsituation besonders bedeutsamen Informationen z.B. die Gesamtsicht aber auch spezielle Bereiche gezielt erfaßt und dokumentiert sind.

Auch im Rahmen einer Anwendung in Verbindung mit einem Airbag-Auslösesystem zeigt das erfindungsgemäße Verfahren besondere Stärken, da es in der Lage ist, die Position der Insassen, insbesondere die Kopfposition bzw. die Ausrichtung der Insassen zu erfassen und dementsprechend geeigneten Maßnahmen zur Auslösung der Airbags insbesondere im Hinblick auf den Auslösezeitpunkt und die Auslösegeschwindigkeit bis hin zum Nichtauslösen eines Airbags zielgerichtet situationsangepaßt zu steuern. Hierdurch gelingt es insbesondere das Auslösen von Airbags in Situationen wie dem unerwünschten bequemen Hinsitzen eines Fahrzeugsinsassen mit Auflegen der -Füße auf das Armaturenbrett, in dem der Airbag untergebracht ist, zu verhindern. Im Fall der Airbagauslösung würde es bei dieser Haltung des Insassen zu erheblichen Verletzungen des Insassens im Beinbereich aber auch im Kopfbereich führen, die bei Nichtauslösen des Airbags nicht entstehen wird. Demzufolge führt die Erfindung im Zusammenwirken mit anderen Komponenten des Fahrzeugs zu einer erhöhten Verkehrssicherheit einerseits des Fahrers bzw. der anderen Insassen des Fahrzeugs aber auch für die anderen Verkehrsteilnehmer.

## Patentansprüche

1. Verfahren zur Überwachung des Innen- bzw. Außenraums eines Fahrzeugs mit einem ersten Sensor, der durch wenigstens eine Rundsichtkamera gebildet wird, bei dem der Innen- bzw. Außenraum durch die Rundsichtkamera erfaßt, die Bilddaten ausgewertet werden,
**dadurch gekennzeichnet,**
**dass** mittels der Auswertung wenigstens ein Bereich selektiert wird,
**dass** dieser Bereich mittels eines zweiten ausrichtbaren Sensors mit eingeschränkten räumlichen Erfassungsbereich erfaßt wird und die durch den zweiten Sensor erfaßten Daten einer Auswertung unterzogen werden.

2. Verfahren zur Überwachung nach Anspruch 1,
**dadurch gekennzeichnet,**
**dass** die Ausrichtung des zweiten Sensors (9) motorisch oder elektronisch durch eine Steuereinheit (7) auf Basis einer automatisierten Auswertung der Bilddaten des ersten Sensors (1, 2; 3, 4) erfolgt.

3. Verfahren zur Überwachung nach Anspruch 2
**dadurch gekennzeichnet,**
**dass** die Auswertung der Bilddaten des ersten Sensors (1, 2; 3, 4) auf Basis einer Bewegungs-, Kontur- und/oder Farbenanalyse erfolgt.

4. Verfahren zur Überwachung nach einem der vorstehenden Ansprüche,
**dadurch gekennzeichnet,**
**dass** die Auswertung der Daten des zweiten Sensors (9) auf die Entfernung und/oder die Relativgeschwindigkeit von Objekten im erfaßten Bereich gerichtet ist.

5. Verfahren zur Überwachung nach einem der vorstehenden Ansprüche,
**dadurch gekennzeichnet,**
**dass** die Auswertung der Bilddaten des ersten Sensors (9) nach einer Transformation der Bilder mit krummlinigen Koordinaten in zylindrische oder ebene Koordinaten erfolgt.

6. Fahrzeug mit einem ersten Sensor, der durch wenigstens eine Rundsichtkamera im Innenraum des Fahrzeugs gebildet wird, deren Sichtfeld den Innen- bzw. Außenraum des Fahrzeuges zumindest teilweise umfaßt,
**dadurch gekennzeichnet ,**
**dass** ein zweiter Sensor (9) mit eingeschränktem räumlichen Erfassungsbereich vorgesehen ist, der abhängig von dem ersten Sensor (1, 2; 3, 4) in seiner Ausrichtung steuerbar ist.

7. Fahrzeug nach Anspruch 6,
**dadurch gekennzeichnet,**
**dass** zur Ausrichtung des zweiten Sensors (9) ein elektrischer oder motorischer Antrieb (8) vorgesehen ist, welcher durch eine Steuereinheit (7) auf Basis einer automatisierten Auswertung der Bilddaten des ersten Sensors (1, 2; 3, 4) durch eine Selektionsstufe (6) ansteuerbar ist.

8. Fahrzeug nach Anspruch 6 oder 7,
**dadurch gekennzeichnet,**
**dass** der erste Sensor (1, 2; 3, 4) im Bereich des Innenspiegels angeordnet ist.

9. Fahrzeug nach einem der vorstehenden Ansprüche 6-8,
**dadurch gekennzeichnet,**
**dass** der erste Sensor zwei Rundsichtkameras (1, 2; 3, 4) aufweist, die gemeinsam eine Stereobildkamera bilden.

10. Fahrzeug nach einem vorstehenden Ansprüche 6-9,
**dadurch gekennzeichnet,**
**dass** der zweite Sensor (9) wenigstens eine Digitalkamera, eine Infrarotkamera, einen Laserpunktsensor oder einen Radarsensor aufweist.

11. Fahrzeug nach einem der vorstehenden Ansprüche 6-10,
**dadurch gekennzeichnet,**
**dass** der zweite Sensor (9) eine Zoomfunktion aufweist, wobei dieser insbesondere entfernungsabhängig im Zoomfaktor anpaßbar ist.

12. Fahrzeug nach einem der vorstehenden Ansprüche 6-11,
**dadurch gekennzeichnet,**
**dass** der zweite Sensor zur stereoskopischen Erfassung geeignet und ausgebildet ist.

13. Fahrzeug nach einem der vorstehenden Ansprüche 6-12,
**dadurch gekennzeichnet,**
**dass** der zweite Sensor zumindest teilweise im Bereich des Armaturenbrett angeordnet ist.

14. Fahrzeug nach einem der vorstehenden Ansprüche 6-13,
**dadurch gekennzeichnet,**
**dass** der zweite Sensor zumindest teilweise im Bereich der Stoßfänger, der Scheinwerfer oder dem Randbereich des Fahrzeugdaches angeordnet ist.

## Claims

1. Method for monitoring the interior space and/or exterior space of a vehicle having a first sensor that is formed by at least one surveillance camera, in the case of which the interior space and/or exterior space is sensed by the surveillance camera and the image data are evaluated, **characterized in that** the evaluation is used to select at least one area, and **in that** this area is sensed by means of a second alignable sensor with a restricted spatial sensing range and the data acquired by the second sensor are subjected to an evaluation.

2. Method for monitoring according to Claim 1, **characterized in that** the alignment of the second sensor (9) is performed by motor or electronically by a control unit (7) on the basis of an automated evaluation of the image data of the first sensor (1, 2; 3, 4).

3. Method for monitoring according to Claim 2, **characterized in that** the evaluation of the image data of the first sensor (1, 2; 3, 4) is performed on the basis of an analysis of movement, contour and/or colour.

4. Method for monitoring according to one of the preceding claims, **characterized in that** the evaluation of the data of the second sensor (9) is directed towards the distance and/or the relative speed of objects in the sensed area.

5. Method for monitoring according to one of the preceding claims, **characterized in that** the evaluation of the image data of the first sensor (9) is performed after a transformation of the images with the aid of curvilinear coordinates in cylindrical or plane coordinates.

6. Vehicle having a first sensor which is formed by at least one surveillance camera in the interior space of the vehicle and whose field of view at least partially covers the interior space and/or exterior space of the vehicle, **characterized in that** a second sensor (9) is provided which has a restricted spatial sensing range and whose alignment can be controlled as a function of the first sensor (1, 2; 3, 4).

7. Vehicle according to Claim 6, **characterized in that** provided for the purpose of aligning the second sensor (9) is an electric or motor drive (8) that can be driven by a control unit (7) on the basis of automated evaluation of the image data of the first sensor (1, 2; 3, 4) by a selection stage (6).

8. Vehicle according to Claim 6 or 7, **characterized in that** the first sensor (1, 2; 3, 4) is arranged in the region of the inside mirror.

9. Vehicle according to one of the preceding Claims 6 - 8, **characterized in that** the first sensor has two surveillance cameras (1, 2; 3, 4) which jointly form a stereo image camera.

10. Vehicle according to one of the preceding Claims 6 - 9, **characterized in that** the second sensor (9) has at least a digital camera, an infrared camera, a laser point sensor or a radar sensor.

11. Vehicle according to one of the preceding Claims 6 - 10, **characterized in that** the second sensor (9) has a zoom function, it being possible to adjust the zoom factor of the sensor as a function of distance in particular.

12. Vehicle according to one of the preceding Claims 6 - 11, **characterized in that** the second sensor is suitable and designed for stereoscopic sensing.

13. Vehicle according to one of the preceding Claims 6 - 12, **characterized in that** the second sensor is arranged at least partially in the region of the dashboard.

14. Vehicle according to one of the preceding Claims 6 - 13, **characterized in that** the second sensor is arranged at least partially in the region of the bumpers, the headlamps or the edge region of the vehicle roof.

## Revendications

1. Procédé pour surveiller l'espace intérieur et extérieur d'un véhicule au moyen d'un premier capteur qui est formé par au moins une caméra panoramique, selon lequel l'espace intérieur et extérieur est enregistré par la caméra panoramique, et les données d'image sont interprétées,
**caractérisé en ce qu'**au moins une zone est sélectionnée au moyen de l'interprétation,
**en ce que** cette zone est enregistrée au moyen d'un deuxième capteur orientable ayant une zone spatiale d'acquisition limitée, et les données enregistrées par le deuxième capteur sont soumises à une interprétation.

2. Procédé de surveillance selon la revendication 1, **caractérisé en ce que** l'orientation du deuxième capteur (9) s'effectue de façon motorisée ou électronique par une unité de commande (7) sur la base d'une interprétation automatisée des données d'image du premier capteur (1, 2 ; 3, 4).

3. Procédé de surveillance selon la revendication 2, **caractérisé en ce que** l'interprétation des données d'image du premier capteur (1, 2 ; 3, 4) s'effectue sur la base d'une analyse de mouvements, de contours et/ou de couleurs.

4. Procédé de surveillance selon l'une quelconque des revendications précédentes, **caractérisé en ce que** l'interprétation des données d'image du deuxième capteur (9) s'intéresse à la distance et/ou à la vitesse relative d'objets dans la zone enregistrée.

5. Procédé de surveillance selon l'une quelconque des revendications précédentes, **caractérisé en ce que** l'interprétation des données d'image du premier capteur (9) s'effectue à la suite d'une transformation des images, de coordonnées curvilignes, en coordonnées cylindriques ou planes.

6. Véhicule équipé d'un premier capteur qui est formé par au moins une caméra panoramique dans l'habitacle du véhicule, dont le champ de vision englobe au moins partiellement l'espace intérieur et extérieur du véhicule,
**caractérisé en ce qu'**il est prévu un deuxième capteur (9) ayant une zone spatiale d'acquisition limitée, dont l'orientation peut être commandée en fonction du premier capteur (1, 2 ; 3, 4).

7. Véhicule selon la revendication 6, **caractérisé en ce qu'**il est prévu pour orienter le deuxième capteur (9) un entraînement électrique ou motorisé (8) qui peut être asservi par une unité de commande (7) sur la base d'une interprétation automatisée des données d'image du premier capteur (1, 2 ; 3, 4) par un module de sélection (6).

8. Véhicule selon la revendication 6 ou 7, **caractérisé en ce que** le premier capteur (1, 2 ; 3, 4) est disposé dans la région du rétroviseur intérieur.

9. Véhicule selon l'une quelconque des revendications précédentes 6 à 8, **caractérisé en ce que** le premier capteur présente deux caméras panoramiques (1, 2 ; 3, 4), qui forment conjointement une caméra stéréoscopique.

10. Véhicule selon l'une quelconque des revendications précédentes 6 à 9, **caractérisé en ce que** le deuxième capteur (9) présente au moins une caméra numérique, une caméra infrarouge, un capteur laser ponctuel ou un capteur radar.

11. Véhicule selon l'une quelconque des revendications précédentes 6 à 10, **caractérisé en ce que** le deuxième capteur (9) présente une fonction de zoom dont le facteur de zoom peut être adapté notamment en fonction de la distance.

12. Véhicule selon l'une quelconque des revendications précédentes 6 à 11, **caractérisé en ce que** le deuxième capteur convient et est conçu pour l'enregistrement stéréoscopique.

13. Véhicule selon l'une quelconque des revendications précédentes 6 à 12, **caractérisé en ce que** le deuxième capteur est disposé au moins pour partie dans la région de la planche de bord.

14. Véhicule selon l'une quelconque des revendications précédentes 6 à 13, **caractérisé en ce que** le deuxième capteur est disposé au moins pour partie dans la région des pare-chocs ou des phares, ou dans la région du bord du toit du véhicule.
